# EUROPEAN PATENT SPECIFICATION

(11) **EP 4 063 449 B1**
(45) Date of publication and mention of the grant of the patent: **13.12.2023**
(21) Application number: 22164395.0
(22) Date of filing: 25.03.2022
(51) Int. Cl.: C08L 9/02, C08L 75/04, C08K 5/15

(54) **THERMOPLASTIC VULCANIZATES COMPRISING ACRYLATE RUBBER AND THERMOPLASTIC POLYURETHANE**
THERMOPLASTISCHE VULKANISATE MIT ACRYLATKAUTSCHUK UND THERMOPLASTISCHEM POLYURETHAN
VULCANISATS THERMOPLASTIQUES COMPRENANT DU CAOUTCHOUC D'ACRYLATE ET DU POLYURÉTHANE THERMOPLASTIQUE

(30) Priority: 25.03.2021 US 202163165926 P; 17.12.2021 US 202163290871 P
(43) Date of publication of application: 28.09.2022
(73) Proprietor: Parker Hannifin Corp., Cleveland, OH 44124-4141 (US)
(72) Inventor: JINDAL, Aditya, Cuyahoga Falls, 44221 (US); MALLAMACI, Michael P, North Canton, 44720 (US)
(74) Representative: Murgitroyd & Company

(56) References cited:
- CN-A- 106 317 729

## Description

### FIELD

The present invention discloses compositions and methods for the preparation of thermoplastic vulcanizates (TPVs) that are resistant to hydrocarbon oils, by the dynamic vulcanization of acrylate rubber (ACM) in thermoplastic polyurethanes. The compositions of this invention can be readily produced and fabricated using commercially suitable plastics compounding and fabricating equipment to yield molded (by injection, extrusion or blow molding) parts with excellent surface appearance. Furthermore, addition-type curing agents that advantageously cure the rubber without the evolution of volatiles, without degradation of the plastic phase, and that facilitate rubber and plastic compatibilization, are disclosed.

### BACKGROUND

The preparation of thermoplastic elastomers by dynamic vulcanization, i.e., thermoplastic vulcanizates (TPVs), although established over four decades ago, is still commercially viable with the use of only one plastic and rubber melt blend, namely isotactic polypropylene (PP) and ethylene/propylene/diene (EPDM) rubber.

Oil-resistant TPVs are used to manufacture a variety of products, such as, for example, gaskets, tubes, hoses, and seals. Currently available oil-resistant TPVs employ semi-crystalline polar plastic materials such as polyesters, nylons, and thermoplastic polyurethanes in combination with polar rubbers that are resistant to hydrocarbon oils, such as, include nitrile/butadiene rubber (NBR), hydrogenated nitrile-butadiene rubber (HNBR), and ethylene/acrylate rubber (AEM).

The molecular weight of commercially available HNBR is much lower than that of EPDM. Also, the EPDM polymer chains have a much larger aspect ratio (polymer length scale/chain thickness) than that of HNBR. Hence the EPDM chains entangle after a much shorter chain length than HNBR, allowing a higher density of trapped entanglements between cross-links than HNBR. This fact and the much higher MW of EPDM than HNBR allows rapid curing of the former rubber in the dynamic vulcanization process. A short cure time is essential in dynamic vulcanization.

The rubber phase of the TPV has to be cured using a curative that does not affect the plastic phase. In the case of PP/EPDM TPVs, cure can be carried out by decomposition of a resole type of phenolic resin that is accelerated by the use of acidic promoters such as stannous chloride. This generates a quinonemethide intermediate which cures the rubber without affecting PP. However, this curing technology adversely effects polar plastic-based TPVs, as acidic materials are polar plastic pro-degradants. Thus, resole phenolic resin rubber cure systems are not suitable for use in dynamic vulcanization of oil-resistant TPVs.

PP/EPDM TPVs can also be cured with peroxide, although peroxide does cleave PP chains to some extent. PP chain cleavage can be limited by, for example, the use of coagents along with the peroxide, or addition of a sacrificial additive that preferentially reacts with peroxide over PP. However, very little loss in MW due to peroxide degradation can be tolerated when using polar plastics because they have molecular weights much lower than PP. Thus, peroxide cure is unacceptable for the preparation of oil-resistant TPVs.

In addition, residual peroxide in a peroxide-cured TPV may necessitate long post cure time after part fabrication to achieve suitable part stability.

Curing of acrylate rubber during the preparation of oil-resistant TPVs commonly results in the elimination of small polar condensate molecules can lead to porous pellets that absorb water during product pelletization. Eliminating water from the pellets sufficiently is difficult, and molding of wet pellets often leads to poor fabricated part surface appearance, in addition to reducing plastic molecular weight. Further, polar condensate molecules are trapped efficiently in the polar TPV melt. Although considerable amounts volatiles are evolved by melt surface thermo-oxidative degradation during the reactive extrusion of TPVs, the surface generated volatiles are readily removed when exposed to vacuum in the extruder. Staged TPV preparation processes, although useful, are undesirable for the preparation of oil-resistant TPVs.

A cured polar rubber swells to a much less extent in a polar plasticizer than EPDM rubber in paraffinic oil. In a TPV, high MW EPDM can readily absorb 150 parts per 100 parts of rubber (phr) of oil without forming a separate oil phase. Over 50 phr of a polar plasticizer may result in a separate plasticizer phase in, for example, an NBR based TPV, leading to plasticizer exudation from the product on storage. Thus, addition of plasticizer is of very limited utility in melt viscosity reduction during the preparation of oil-resistant TPVs.

Plastic rubber combinations such as fluoroplastic/fluoroelastomer, PBT or Nylon/fluoroelastomer, PBT/Silicone rubber have a major drawback in TPV applications: these systems are not capable of forming the a "mechanical lock" similar to that generated in PP/EPDM systems. Further, the compatibilizers are not effective to improve the adhesion between the plastic and rubber phase. And because of their low surface energy, fluoroelastomers and silicone rubber can be dispersed readily in plastic materials, but this property precludes strong adhesion between the plastic and rubber phases.

Thus, there is a need for oil-resistant TPVs that avoid the compositional, manufacturing, and use limitations discussed above.

### Summary

This disclosure provides a convenient solution to the problems identified above.

In one aspect, this disclosure provides thermoplastic vulcanizate compositions, typically oil resistant thermoplastic vulcanizates that are readily processable. These TPVs are made by dynamic vulcanization of acrylate rubber (ACM) with high melting point, semi-crystalline thermoplastic materials. The thermoplastic vulcanizates disclosed herein are typically resistant to hydrocarbon oils at a broad range of temperatures.

In another aspect, the semi-crystalline thermoplastic materials are selected from thermoplastic polyurethanes.

In other aspects, the TPVs are made using addition-type curing agents that do not generate volatiles during cure, and do not degrade the plastic phase.

In other aspects, the TPVs can optionally be prepared to contain adhesion promoters to increase their ability to bond to metal or polymer substrates. Thus, adhesion promoters can optionally be blended into thermoplastic vulcanizates subsequent to vulcanization.

In a broad aspect, this disclosure provides thermoplastic vulcanizates comprising a plastic phase and a rubber phase, wherein
a) the plastic phase comprises from about 25 parts to about 95 parts by weight, based on 100 parts by weight of the plastic and rubber phases, of a thermoplastic polyurethane with the hard segments having a melting point of about 130°C to about 240°C,
b) the rubber phase comprises from about 75 parts to about 5 parts, by weight based on 100 parts by weight of the plastic and rubber phases, of the rubber which is a carboxylic acid cure site and/or chlorine cure site functional acrylate rubber, or an anhydride cure site functional acrylate rubber; and
c) crosslinks between reactive groups in the acrylate rubber.

In another aspect, the disclosure provides thermoplastic vulcanizates prepared by dynamically crosslinking a melt blend with an addition type curing agent, wherein the melt blend comprises a plastic phase and a rubber phase, and wherein
the plastic phase comprises from about 25 parts to about 95 parts by weight, based on 100 parts by weight of the plastic and rubber phases, of a thermoplastic polyurethane with the hard segments having a melting point of about 130°C to about 240°C, and
the rubber phase comprises from about 75 parts to about 5 parts, by weight based on 100 parts by weight of the plastic and rubber phases, of the rubber which is a carboxylic acid cure site and/or chlorine cure site functional acrylate rubber, or an anhydride cure site functional acrylate rubber.

In another aspect, this disclosure provides a process for producing thermoplastic vulcanizates comprising mixing a composition comprising a plastic phase and a rubber phase with an addition type curing agent, wherein the mixing is carried out under mixing conditions that produce an appropriate shear profile and at a temperature above the melting point of the plastic phase, and wherein
the plastic phase comprises from about 25 parts to about 95 parts by weight, based on 100 parts by weight of the plastic and rubber phases, of a thermoplastic polyurethane with the hard segments having a melting point of about 130°C to about 240°C; and
the rubber phase comprises from about 75 parts to about 5 parts, by weight based on 100 parts by weight of the plastic and rubber phases, of the rubber which is a carboxylic acid cure site and/or chlorine cure site functional acrylate rubber, or an anhydride cure site functional acrylate rubber.

The compositions of this disclosure are made using addition-type curing agents that advantageously cure the rubber without evolution of volatiles or degradation of the plastic phase, and that facilitate rubber and plastic compatibilization.

The compositions of this disclosure can be readily produced using conventional plastic compounding equipment. For example, the compositions of this disclosure can be prepared using a co-rotating twin screw extruder (TSE) or a kneader extruder. Further, the processes of this disclosure do not require and preferably avoid a staged TPV preparation process.

Using conventional fabricating equipment (e.g., by injection, extrusion and blow molding equipment) the compositions described herein can be used to yield a variety of molded products. These products have excellent surface appearance.

The TPVs disclosed have excellent resistance to oils including hydrocarbon oils and are therefore suitable for a wide variety of uses. These TPVs do not exhibit the compositional, manufacturing, and use limitations discussed above.

In another aspect, this disclosure provides thermoplastic elastomers comprising a plastic phase and a rubber phase, wherein
a) the plastic phase comprises from about 25 parts to about 95 parts by weight, based on 100 parts by weight of the plastic and rubber phases, of a thermoplastic polyurethane with the hard segments having a melting point of about 130°C to about 240°C, and
b) the rubber phase comprises from about 75 parts to about 5 parts, by weight based on 100 parts by weight of the plastic and rubber phases, of the rubber which is a carboxylic acid cure site and/or chlorine cure site functional acrylate rubber, or an anhydride cure site functional acrylate rubber.

The thermoplastic elastomers are typically pre-vulcanized compositions and can be used as intermediates in the preparation of the disclosed fully vulcanized TPV products. These elastomers are pre-crosslinked compositions and are substantially free of cross-linked rubber material. The final thermoplastic vulcanizates of this disclosure can be made directly from the thermoplastic elastomers by mixing the elastomer composition with an addition-type curing agent and subjecting the resulting mixture to dynamic vulcanization.

In a related aspect, this disclosure provides thermoplastic elastomers comprising a plastic phase and a rubber phase as defined above as well as an addition-type curing agent.

### BRIEF DESCRIPTION OF THE FIGURES

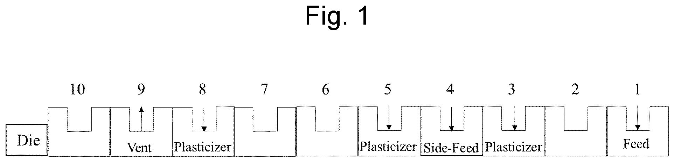

Figure 1 is a diagram of the barrel setup in the twin-screw extruder described and used in Example 1. The numbers refer to the barrels described in the examples.

### DETAILED DESCRIPTION

As used herein, the term thermoplastic vulcanizate (TPV) refers a thermoplastic elastomer produced via dynamic vulcanization of a blend of a rubber phase and a thermoplastic polymer in the presence of a vulcanizing system.

The terms ACM, acrylate rubber, acrylic rubber, and alkyl acrylate copolymer are used interchangeably.

The terms thermoplastic urethanes, thermoplastic polyurethanes, polyurethanes, and TPUs are used interchangeably.

As used herein, the term "dynamic vulcanization" means a vulcanization or curing process for a rubber contained in a thermoplastic vulcanizate composition, wherein the rubber is vulcanized under mixing conditions that produce an appropriate shear profile and at a temperature above the melting point of the TPU component. The rubber is thus simultaneously cross-linked and typically dispersed as fine particles within the TPU matrix. Although particles are the typical morphology, other morphologies may also exist.

Thermoplastic vulcanizates typically have finely dispersed, micron-sized, crosslinked rubber particles distributed in a continuous thermoplastic matrix.

Unless otherwise specified, "parts" of a particular TPV component, e.g., plastic, rubber or curing agent, refers to parts by weight.

As noted above, this disclosure provides thermoplastic vulcanizates comprising a plastic phase and a rubber phase.

In this aspect, Embodiment 1, the plastic phase comprises from about 25 parts to about 95 parts by weight, based on 100 parts by weight of the plastic and rubber phases, of a thermoplastic polyurethane with the hard segments having a melting point of about 130°C to about 240°C.

The rubber phase of Embodiment 1 comprises from about 75 parts to about 5 parts, by weight based on 100 parts by weight of the plastic and rubber phases, of the rubber which is a carboxylic acid cure site and/or chlorine cure site functional acrylate rubber, or an anhydride cure site functional acrylate rubber; and crosslinks between reactive groups in the acrylate rubber.

In the thermoplastic vulcanizates of Embodiment 1, the crosslinks can be formed by a reaction between an addition type curing agent and the reactive groups in the acrylate rubber.

In another embodiment, Embodiment 2, this disclosure provides thermoplastic vulcanizates prepared by dynamically crosslinking a melt blend with an addition type curing agent. The melt blend comprises a plastic phase and a rubber phase.

The plastic phase in Embodiment 2 comprises from about 25 parts to about 95 parts by weight, based on 100 parts by weight of the plastic and rubber phases, of a thermoplastic polyurethane with the hard segments having a melting point of about 130°C to about 240°C.

The rubber phase in Embodiment 2 comprises from about 75 parts to about 5 parts, by weight based on 100 parts by weight of the plastic and rubber phases, of the rubber which is a carboxylic acid cure site and/or chlorine cure site functional acrylate rubber, or an anhydride cure site functional acrylate rubber.

The thermoplastic polyurethanes have hard crystalline segments with the melting point of about 130°C to about 240°C, or the hard amorphous segments with a high glass transition temperature help retain the melt strength in the temperature range mentioned above while coming out of the extruder. The amount of plastic ranges from about 25 parts to 95 parts, and the amount of ACM ranges from about 75 parts to about 5 parts, based on 100 parts of plastic and rubber. In particular aspects, the amount of curing agent useful herein is from about 0.5 part to about 15 parts based on 100 parts of rubber and plastic.

In certain aspects of Embodiments 1 and 2, the plastic phase comprises about 25 parts to about 70 parts by weight, based on 100 parts by weight of the plastic and rubber phases, of the plastic, and the plastic has a melting point of about 130°C to about 240°C and is a thermoplastic polyurethane, and the rubber phase comprises from about 75 parts to about 30 parts, by weight based on 100 parts by weight of the plastic and rubber phases, of the rubber which is a carboxylic acid cure site and/or chlorine cure site functional acrylate rubber, or an anhydride cure site functional acrylate rubber.

In other aspects of embodiments 1 and 2, the plastic phase comprises about 70 parts to about 95 parts by weight, based on 100 parts by weight of the plastic and rubber phases, of the plastic, and the plastic has a melting point of about 130°C to about 240°C and is a thermoplastic polyurethane, and the rubber phase comprises from about 30 parts to about 5 parts, by weight based on 100 parts by weight of the plastic and rubber phases, of the rubber which is a carboxylic acid cure site and/or chlorine cure site functional acrylate rubber, or an anhydride cure site functional acrylate rubber.

In other aspects of embodiments 1 and 2, the plastic phase comprises about 25 parts to about 50 parts by weight, based on 100 parts by weight of the plastic and rubber phases, of the plastic, and the plastic has a melting point of about 130°C to about 240°C and is a thermoplastic polyurethane, and the rubber phase comprises from about 75 parts to about 50 parts, by weight based on 100 parts by weight of the plastic and rubber phases, of the rubber which is a carboxylic acid cure site and/or chlorine cure site functional acrylate rubber, or an anhydride cure site functional acrylate rubber.

### Thermoplastic polymer

The thermoplastic polymers useful herein are desirably polar, highly crystalline, partially crystalline, highly amorphous, or partially amorphous, and have relatively high melting points. The melting point of the thermoplastic polymers is between about 130°C and about 240°C. Thus, the thermoplastic polymers have melting points of about 130°C, about 140°C, about 150°C, about 160°C, about 170°C, about 180°C, about 190°C, about 200°C, about 210°C, about 220°C, about 230°C, or about 240°C. Suitable thermoplastic polymers include thermoplastic polyurethanes.

The molecular weight of a suitable thermoplastic polymer is such that it is a suitable engineering plastic. Accordingly, the weight average molecular weight of the various TPUs generally range from about 30,000 to above 230,000 g/mol with from about 50,000 to about 220,000 g/mol being preferred.

Suitable amounts of plastic (thermoplastic polymer) based on 100 parts of plastic and rubber in the TPV formulations include about 25 parts, about 30 parts, about 35 parts, about 40 parts, about 45 parts, about 50 parts, about 55 parts, about 60 parts, about 65 parts, about 70 parts, about 75 parts, about 80 parts, about 85 parts, about 90 parts, and about 95 parts.

### Thermoplastic polyurethane

A thermoplastic polyurethane is made in a conventional manner, as known in the art. Typical polyurethanes are made from a polyol intermediate and generally an equivalent amount of a polyisocyanate. The polyol intermediate is generally a liquid polyether polyol or a polyester polyol or combinations thereof having a number average of molecular weight of from about 450 to about 6,000 g/mol with from about 600 to about 4,500 g/mol being preferred. In order to avoid crosslinking, generally only polyether or polyester diols are utilized.

Polyether polyols are generally made by reacting an alkylene oxide having from 2 to about 10 carbon atoms such as propylene oxide with a strong base such as potassium hydroxide, preferably in the presence of water, glycols and so forth. Polyether polyols made from ethylene oxide, propylene oxide, or epoxides, or copolymers thereof, are preferred. Other polyethers which can be utilized are those which are produced as by polymerization of tetrahydrofuran or epoxides such as epichlorohydrin, ethylene oxide, propylene oxide, butylene oxide, styrene oxide, for example in the presence of Lewis catalysts such as boron trifluoride, or by the addition of epoxides, preferably of ethylene oxide and propylene oxide, optionally mixed or in succession, onto starter components with reactive hydrogen atoms such as water, alcohols, ammonia, or amines, for example ethylene glycol, 1,3- or 1,2-propylene glycol, water, 4,4'-dihydroxydiphenyl-propane, aniline, ethanolamine or ethylenediamine.

Polyester polyols are formed from the condensation of one or more polyhydric alcohols having from 2 to 15 carbon atoms with one or more polycarboxylic acids having from 2 to 14 carbon atoms. Examples of suitable polyhydric alcohols include the following: ethylene glycol, propylene glycol such as 1,2-propylene glycol and 1,3-propylene glycol, glycerol; pentaerythritol; trimethylolpropane; 1,4,6-octanetriol; butanediol; pentanediol; hexanediol; dodecanediol; octanediol; chloropentanediol, glycerol monallyl ether; glycerol monoethyl ether, diethylene glycol; 2-ethylhexanediol-1,4; cyclohexanediol-1,4; 1,2,6-hexanetriol; 1,3,5-hexanetriol; 1,3-bis-(2-hydroxyethoxy) propane, 1,4- and 2,3-butylene glycol, neopentyl glycol, 1,4-bis(hydroxymethyl)cyclohexane, trimethylolethane, together with di-, tri-, tetra-, and higher polyethylene glycols, di- and higher polypropylene glycols, together with di- and higher polybutylene glycols, and the like. Examples of polycarboxylic acids include the following: phthalic acid; isophthalic acid; terephthalic acid; tetrachlorophthalic acid; maleic acid; dodecylmaleic acid; octadecenylmaleic acid; fumaric acid; aconitic acid; trimellitic acid; tricarballylic acid; 3,3'-thiodipropionic acid; succinic acid; adipic acid; malonic acid, glutaric acid, pimelic acid, sebacic acid, cyclohexane-1,2-dicarboxylic acid; 1,4-chclohexadiene-1,2-dicarboxylic acid; 3-methyl-3,5-cyclohexadiene-1,2-dicarboxylic acid and the corresponding acid anhydrides such as tetrahydrophthalic anhydride, hexahydrophthalic anhydride, tetrachlorophthalic anhydride, endomethylenetetrahydrophthalic anhydride, acid chlorides and acid esters such as phthalic anhydride, phthaloyl chloride and the dimethyl ester of phthalic acid, dimerized and trimerized unsaturated fatty acids, optionally mixed with monomeric unsaturated fatty acids, terephthalic acid monomethyl ester and terephthalic acid monoglycol ester. Preferred polycarboxylic acids are the aliphatic and cycloaliphatic dicarboxylic acids containing no more than 14 carbon atoms and the aromatic dicarboxylic acids containing no more than 14 atoms. Any polyhydric alcohol having more than 2 hydroxyl groups or any polycarboxylic acid having more than 2 carboxylic groups used to make the polyesters should be used in only very minor amounts to prevent crosslinking and gelling.

Polyesters from lactones (for example e-caprolactone) and polyacetals, polycarbonates or polybutadienes containing terminal hydroxyl groups are also suitable.

Highly preferred polyol intermediates include polypropylene ether diol, poly-1,2-butylene ether diol, and most preferably poly-1,4-tetramethylene ether, and epsilonpolycaprolactone diols.

Isocyanates which may be used are aliphatic, cycloaliphatic, araliphatic, aromatic and heterocyclic polyisocyanates or any desired mixtures of these polyisocyanates (c.f. Houben-Weyl, Methoden der Organischen Chemie, volume E 20, Makromolekulare Stoffe, Georg Thieme Verlag, Stuttgart, N.Y.1978, pages 1587-1593). Examples are ethylene diisocyanate, 1,4-tetramethylene diisocyanate, 1,6-hexamethylene diisocyanate, 1,12-dodecane diisocyanate, 1,3-cyclobutane diisocyanate, 1,3- and 1,4-cyclohexane diisocyanate together with any desired mixtures of these isomers, 1-isocyanato-3,3,5-trimethyl 5-isocyanatomethyl-cyclohexane, 2,4- and 2,6-hexahydrotolylene diisocyanate together with any desired mixtures of these isomers.

Aromatic polyisocyanate is preferred and generally has a formula R(NCO)₂. Inasmuch as combinations of various polyisocyanates can be utilized, it is to be understood that the amount is not necessarily an integer such as two. R is an aliphatic having from about 2 to about 20 carbon atoms with from about 6 to about 15 carbon atoms being preferred, or an aromatic including an alkyl substituted aromatic having from about 6 to about 20 carbon atoms with from about 6 to about 15 carbon atoms being preferred, or combinations thereof. Examples of suitable polyisocyanates include 1,6-diisocyanato hexane, 2,2,4- and/or 2,4,4-trimethyl hexamethylene diisocyanate, p- and m-tetramethyl xylene diisocyanate, dicyclohexylmethane-4,4'-diisocyanate (hydrogenated MDI), 4,4-methylene diphenyl isocyanate (MDI), p- and m-phenylene diisocyanate, 2,4- and/or 2,6-toluene diisocyanate (TDI), durene-1,4-diisocyanate, isophorone diisocyanate, isopropylene-bis-(p-phenylene) diisocyanate) and sulfone-bis-(p-phenylene) Diisocyanate. The various diphenyl methane diisocyanates (MDI) and mixtures of MDI with polymeric MDI having an average isocyanate functionality of approximately 2 is preferred.

Isocyanates having a higher functionality can also be used, such as 4,4',4"-triphenylmethane triisocyanate, polyphenyl/polymethylene polyisocyanates (for example obtained by aniline/formaldehyde condensation and subsequent phosgenation), together with the distillation residues containing isocyanate groups which arise during industrial isocyanate production, optionally dissolved in one or more of the above-stated polisocyanates. However, care must be taken in this case to ensure that an average functionality of two is not substantially exceeded if the polyurethanes are to be melt processed. It may optionally be necessary to compensate for reactants with an elevated functionality by also using other reactants with a functionality of lower than two. Monofunctional isocyanates suitable for this purpose are, for example, stearyl isocyanate, cyclohexyl isocyanate and phenyl isocyanate.

Other descriptions of TPUs and TPU forming components including diisocyanates, hydroxy terminated polyethers and polyesters, and diamines, which can be utilized in the present invention, can be found in U.S. Pat. Nos. 5,142,001, 5,739,252; and 5,905,133 TPUs containing crosslinked polyurethanes as set forth in U.S. Pat. No. 5,908,894 are also suitable for the practice of this

TPUs suitable for practice of this invention may be partially crystalline due to the hard segment content where the crystalline domains act as virtual crosslinks to render the TPU elastic and also allow thermo-plastic processability at elevated temperatures by crystallite melting. Completely amorphous TPUs are also suitable for the practice of this invention.

The equivalent ratio of the polyisocyanate to the polyether or polyester polyol, i.e. NCO/OH is generally from about 0.90 to about 1.10, desirably from about 0.95 to about 1.05, and preferably from about 0.97 to about 1.03.

The urethane prepolymers of the present invention are generally extended by a polyol having generally two active hydroxyl groups. Such extending polyols are generally discussed herein above with regard to the intermediate polyol Chain extenders generally have an average of 1.8 to 3.0 Zerewitinoff active hydrogen atoms and a molecular weight of about 62 to about 400. These compounds include compounds containing amino groups, thiol groups or carboxyl groups and those with two to eight, preferably two hydroxyl groups.

Examples of chain extending compounds are di- and polyols such as ethylene glycol, 1,2- and 1,3-propylene glycol, 1,4- and 2,3-butylene glycol, 1,5-pentanediol, 1,6 hexanediol, 1,8-octanediol, neopentyl glycol, 1,4-bis(hydroxymethyl)cyclohexane, 2-methyl-1,3-propanediol, glycerol, trimethylolpropane, 1,2,6-hexanetriol, trimethylolethane and pentaerythritol, di, tri-, tetra- and higher polyethylene glycols with a molecular weight of up to 400, together with di- and higher polypropylene glycols with a molecular weight of up to 400, 4,4'-dihydroxydiphenylpropane, di(hydroxymethyl)hydroquinone, ethanolamine, diethanolamine, N-methyldiethanolamine, triethanolamine and 3-aminopropanol; aliphatic diamines such as, for example, ethylenediamine, 1,4-tetramethylenediamine, hexamethylenediamine, together with the mixtures thereof, 1-amino-3,3,5-trimethyl-5-aminomethylcyclohexane ("isophoronediamine"), 2,4- and 2,6-hexahydrotoluylenediamine together with the mixtures thereof, perhydro-2,4'and -4,4'-diaminodiphenylmethane, p-xylylenediamine and bis-(3-aminopropyl)methylamine; aromatic diamines which may be utilized are bisanthranilic acid esters, 3,5- and 2,4-diaminobenzoic acid esters, 3,3'-dichloro-4,4'-diaminodiphenylmethane, tolylenediamine and 4,4'-diaminodiphenylmethane. Chain extenders are utilized in an effective amount to achieve desired end results.

Compounds which are monofunctional towards isocyanates may also be used in proportions of up to 2 wt. %, relative to the thermo-plastic polyurethan elastomer, as chain terminators. Suitable compounds are, for example, monoamines such as butyl- and dibutylamine, octylamine, stearylamine, N-methylstearylamine, pyrrolidine, piperidine and cyclohexylamine, monoalcohols such as butanol, 2-ethylhexanol, octanol, dodecanol, the various amyl alcohols, cyclohexanol and ethylene glycol monomethyl ether, with 2-ethylhexanol and ethylene glycol monomethyl ether being preferred.

Catalysts are often utilized to promote the urethane chain extension and preferably include tin compounds such as, for example, various stannous carboxylates such as stannous acetate, stannous octoate, stannous laurate, stannous oleate and the like; or dialkyl tin salts of carboxylic acids such as dibutyltin diacetate, dibutyltin dilaurate, dibutyltin maleate, dibutyltin di-2-ethylhexoate, dilauryltin diacetate, dioctyltin diacetate and the like. As an alternative or in addition to the above tin compounds, various tertiary amines can be used such as triethylamine, benzyldimethylamine, triethylenediamine, and tetramethylbutanediamine. The tin catalysts, when utilized, are generally used in amount of 0.5 parts or less, i.e., in the range of about 0.01 to 0.5 parts, by weight per 100 parts of prepolymer. The tertiary amine catalysts, when utilized, can be used in amounts of 0.01 to about 5 parts by weight per 100 parts of prepolymer. In addition to the above catalysts, further compounds which may be considered are: titanium, bismuth and antimony compounds, such as for example antimony triisopropoxide, antimony octate, antimony tallate, bismuth salts of carboxylic acids with 2 to 20 carbon atoms, such as for example bismuth trioctanoate, dibutylbismuth octanoate, triphenylbismuth didecanoate and dibutyltitanium bis(acetylacetonate).

The amount of catalysts, when utilized, is generally from about 0.01 to about 1.0 parts by weight per 100 parts by weight of the prepolymer.

Particularly useful thermoplastic polyurethanes for use herein in the plastic phase have hard segments which are the reaction product of 4,4'-diphenylmethane diisocyanate or toluene diisocyanate and butanediol, hydroquinone bis(2-hydroxyethyl)ether or 1,3-bis(2-hydroxyethyl)resorcinol as chain extender, and polyether or polyester soft segments.

### Acrylate Rubber (ACM)

As used herein, the terms acrylic rubber, acrylate, and acrylate rubber refer to the rubber materials used to form the rubber phase of the thermoplastic vulcanizates of this disclosure. The acrylate rubbers useful as the rubber phase of the thermoplastic vulcanizate are typically polymerized from monomers comprising alkyl acrylates wherein the alkyl portion of the ester has from 1 to 10 or 12 carbon atoms, with from 1 to 4 carbon atoms being preferred. The total carbon atoms of each alkyl acrylate may range from 4 to 13 or 15 carbon atoms and include alkyl substituted, e.g. alkyl alkylacrylates such as methyl methacrylate in small amounts, i.e., desirably less than 5, 10 or 15 mole percent. Desirably the monomers include unsaturated mono or polycarboxylic acids or anhydrides thereof having from about 2 to about 15 carbon atoms. Monomers such as methyl methacrylate form thermoplastic rather than rubbery polymers when present in high amounts. Specific examples of rubbery acrylic polymers include polymers of methyl acrylate, butyl acrylate, butyl acrylate, ethylhexyl acrylate, and the like. The acrylic polymers generally include repeat units with pendant or terminal functionality (e.g., pendant carboxylic groups to facilitate crosslinking with oxazoline curatives). These polymers desirably have from about 1 or 2 to about 10 mole percent, more desirably from about 2 or 3 to about 8 mole percent repeat units with at least one carboxylic acid or anhydride of a dicarboxylic acid. If the polymers are only copolymers of acrylate and acid or anhydride monomers they desirably have from about 90 to about 98 mole percent repeat units from acrylates, more desirably from about 92 to about 97 or 98 mole percent.

The carboxylic acid cure site in the rubber may alternatively be generated by heat during the rubber and plastic melt blending process. For example, tert-butyl acrylate or tert-butoxycarbonyl acrylate that is copolymerized into the ethylene-acrylate or acrylate rubber can decompose to a repeat unit as from acrylic acid and a free isobutylene molecule (and carbon dioxide in the case of the tert-butoxycarbonyl group), thus generating the desired carboxylic acid cure sites. The tert-butyl acrylate. tert-butyl fumarate and/or tert-butoxycarbonyl acrylate are desirably present as repeat units in the amounts set forth above for carboxyl and/or anhydride groups. A limited amount of unmasked acid cure sites in the rubber, or acids such as camphorsulfonic acid or methanesulfonic acid may be used to catalyze decomposition of the pendent tert-butyl groups in such a rubber. The use of the masked cure sites described above may be useful in cases where the rubber does not form a good blend with the plastic due to acid catalyzed decomposition and/or crosslinking reactions of the rubber. When the cure sites in the rubber are masked, the desired cure sites are generated only after an intimate rubber and plastic blend has been formed, thus precluding a premature cure of the rubber portion of the TPV. This technology could therefore offer a process advantage in TPV production. The rubber, plastic, and curative could be melt mixed simultaneously, instead of the normal procedure of adding the curative to the rubber and plastic melt blend. The presence of the masked cure site would prevent rubber crosslinking prior to suitable rubber and plastic blend formation.

Other suitable acrylic rubbers include copolymers of ethylene and the above-noted alkyl acrylates wherein the amount of ethylene is desirably high, e.g. from about 10 to about 90 mole percent, desirably from about 30 to about 70 mole percent, and preferably from about 50 to about 70 mole percent of the repeat groups based upon the total number of moles of repeat groups in the copolymer. Thus, the alkyl acrylates in the copolymer are desirably from about 10 to about 90 mole percent, more desirably from about 30 to about 70 mole percent, and preferably from about 30 to about 50 mole percent of the ethylene-acrylate copolymers. Other acrylic copolymers include polymers from three or more different monomers such as ethylene-acrylate-carboxylic acid polymers, or ethylene-acrylate-maleic anhydride polymers, wherein the unsaturated acids have from 2 to 15 carbon atoms and desirably from 2 to 10 carbon atoms. Such ethylene-acrylate-maleic anhydride terpolymer rubbers are available from DuPont. More specifically, such polymers from three or more different monomers generally contain from about 35 to about 90 mole percent and desirably from about 48 or 60 to about 80 mole percent of ethylene repeat groups, generally from about 0.5 to about 10 mole percent and desirably from about 1 or 2 to about 8 mole percent of carboxylic acid repeat and/or anhydride groups (e.g. from an unsaturated carboxylic acid), and generally from about 9.5 or 10 to about 60 or 65 mole percent and desirably from about 18 or 19 to about 50 mole percent of alkyl acrylate repeat groups based upon the total number of repeat groups in the terpolymer. The acid repeat groups are preferably carboxylic acid groups derived from unsaturated mono or polycarboxylic acids or anhydrides of unsaturated polycarboxylic acids, which repeat groups have been copolymerized into the acrylic rubber. A specific commercially available compound is Vamac GLS, manufactured by DuPont, which generally has about 68 mole percent ethylene, about 30 mole percent of methyl acrylate, and about 2 mole percent of anhydride functionality.

Suitable acrylate rubber for use herein contain carboxylic acid, chlorine, or anhydride cure sites, or mixtures thereof. The rubbers are typically produced by emulsion polymerization, having a major backbone composition of poly (ethyl acrylate) [T_{g}=-18⁰C, maximum oil resistance] or poly (butyl acrylate) [T_{g}=-55⁰C, poorer oil resistance]. Copolymers of ethyl acrylate and butyl acrylate allow balancing of rubber low temperature properties and oil resistance. Examples of small quantities of additional monomers that are copolymerized into the acrylate backbone described above, for further optimizing rubber low temperature properties and oil resistance include methoxyethyl (meth)acrylate and polyethylene glycol (meth)acrylate (US 2018 / 0118866). Examples of suitable commercially available acrylate rubber for the practice of his invention include HyTemp^{R} 4065 and 4053 EP (both products containing carboxylic acid plus chlorine cure sites) and HyTemp^{R} AR715 (chlorine cure sites only).

In certain embodiments, the melt blend comprises about 25 parts to about 35 parts by weight, based on 100 parts by weight of the plastic and rubber phases, of an thermoplastic polyurethane, and 75 parts to about 65 parts, by weight based on 100 parts by weight of the plastic and rubber phases, of acrylic rubber.

In certain embodiments, the melt blend comprises about 30 parts to about 40 parts by weight, based on 100 parts by weight of the plastic and rubber phases, of an thermoplastic polyurethane, and 70 parts to about 60 parts, by weight based on 100 parts by weight of the plastic and rubber phases, of acrylic rubber.

In certain embodiments, the melt blend comprises about 35 parts to about 45 parts by weight, based on 100 parts by weight of the plastic and rubber phases, of an thermoplastic polyurethane, and 65 parts to about 55 parts, by weight based on 100 parts by weight of the plastic and rubber phases, of acrylic rubber.

In certain embodiments, the melt blend comprises about 45 parts to about 55 parts by weight, based on 100 parts by weight of the plastic and rubber phases, of an thermoplastic polyurethane, and 55 parts to about 45 parts, by weight based on 100 parts by weight of the plastic and rubber phases, of acrylic rubber.

In certain embodiments, the melt blend comprises about 55 parts to about 65 parts by weight, based on 100 parts by weight of the plastic and rubber phases, of an thermoplastic polyurethane, and 45 parts to about 35 parts, by weight based on 100 parts by weight of the plastic and rubber phases, of acrylic rubber.

In certain embodiments, the melt blend comprises about 65 parts to about 75 parts by weight, based on 100 parts by weight of the plastic and rubber phases, of an thermoplastic polyurethane, and 35 parts to about 25 parts, by weight based on 100 parts by weight of the plastic and rubber phases, of acrylic rubber.

In certain embodiments, the melt blend comprises about 75 parts to about 85 parts by weight, based on 100 parts by weight of the plastic and rubber phases, of an thermoplastic polyurethane, and 25 parts to about 15 parts, by weight based on 100 parts by weight of the plastic and rubber phases, of acrylic rubber.

In certain embodiments, the melt blend comprises about 85 parts to about 95 parts by weight, based on 100 parts by weight of the plastic and rubber phases, of an thermoplastic polyurethane, and 15 parts to about 5 parts, by weight based on 100 parts by weight of the plastic and rubber phases, of acrylic rubber.

### Addition type curing agent

The acrylic rubber is cured utilizing various curative compounds including oxazoline, oxazine, and imidazolines such as bisimidazoline. More specifically, the rubber phase is cured via reactive groups, e.g., carboxylic moieties, in the rubber, using addition type curing agents such as 1,3-phenylene-bis 2,2'-(oxazoline-2). Alternatively, the addition type curing agent can be a multifunctional epoxide.

Suitable addition type curing agents for use herein include those that do not break down the plastic phase and do not form volatile compounds such as water. Other curing agents can be utilized such as free radical generating compounds but are less desirable and are therefore used in small amounts such as, for example, less than 1.0 parts by weight and desirably less than 0.5 parts by weight based upon 100 parts by weight of the acrylate rubber. A highly preferred addition curative or cross-linking agent is the various oxazolines or oxazines such as those having Formula A or Formula B 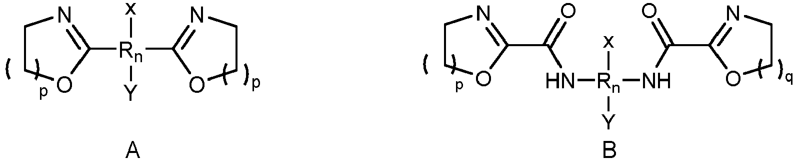 wherein R or R' is an aliphatic or aromatic hydrocarbon group such as alkylene or arylene having 1 to 24 carbon atoms optionally substituted with one or more alkyl groups having 1 to 6 carbon atoms or substituted with an aryl group having 6 to 9 carbon atoms; n is 0 or 1, when n equals 1 then X and Y are hydrogen atoms or independently an 2-oxazoline group or a 1,3-oxazine group, or a 2-oxazoline group or a 1,3-oxazine group and a hydrogen atom, with the remaining carbon atoms having hydrogen atoms thereon, p and q, independently, is 1 or 2, and when n equals 0 then R, X, and Y are nonexistent. Further, each oxazoline group of the above formula may optionally be substituted with an alkyl of 1 to 6 carbon atoms. Further descriptions of said polyvalent oxazolines are set forth in U.S. Pat. No. 4,806,588, Preferred oxazolines include 2,2'-bis(oxazoline-2), 2,2'hexamethylenedicarbamoylbis(oxazoline-2), and 1,3-phenylene-2,2'bis(oxazoline-2).

Various bismaleimides as well as phenolic resins can also be used as curatives. Examples of bismaleimides include a bismaleimide based on methylene dianiline (e.g., Matrimid 5292A from Ciba-Geigy), a bismaleimide based on toluene diamine (e.g., HVA-2 from DuPont), and the like. The phenolic curing agents are well known to the art and literature and include polymers obtained by the polymerization of phenol with formaldehyde. The polymerization rate is pH dependent, with the highest reaction rates occurring at both high and low pH. A more detailed description of the preparation of phenolic resins is set forth in "Principles of Polymerization" 3.sup.rd Edition, George Odian, pages 125-131, John Wiley Sons, Inc., N.Y., N.Y., 1991, Examples of specific phenolic resins include those of formula C 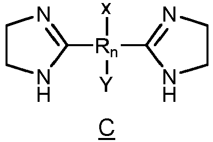 where Rand n are defined as above for the multifunctional (polyvalent) oxazolines and X and Y, are a hydrogen atom, or, independently, an imidazoline group, or an imadazoline group and a hydrogen atom. A preferred multifunctional imidazoline is bismidazoline.

Particularly useful addition type curing agents for use herein are 2,2'-(1,3-phenylene)bis(2-oxazoline) (1,3-PBO), 2,2'-(1,4-phenylene)bis(2-oxazoline) (1,4-PBO), and 2,2'-(2,6-pyridylene)bis(2-oxazoline) (2,6-PyBO), or mixtures thereof.

Still another group of addition type curatives are the various multifunctional epoxides such as the various Shell Epon^{®} resins, epoxidized vegetable oils, tris(2,3-epoxypropyl)isocyanate, and 4,4'-methylene bis(N,N-diglycidylaniline), and multifunctional aziridines. A particularly useful epoxide for use herein as the addition type curing agent is a styrene/glycidyl methacrylate copolymer.

2,6-PyBO has a faster rubber cure rate than 1,3-PBO and, therefore, can be used advantageously when rapid cure is desired.

In certain embodiments, the curing agent, typically an excess of the curing agent relative to plastic, can be melt blended with the plastic to produce a blend of curative and plastic. The excess curing agent end-functionalizes the carboxylic acid moieties of the plastic macromolecules which compatibilizes the plastic with the rubber and limits chain extension of the plastic macromolecules.

The amount of the curative or curing agent is generally from about 0.5 to 15, desirably from about 1 to 12 parts by weight for every 100 parts by weight of the acrylate rubber and the plastic. Suitable amounts of curing agent include about 0.5, 1, 2, 3, 4, 5, 6, 7, 8, 9, 10, 11, 12, 13, 14 and 15 parts by weight for every 100 parts by weight of the acrylate rubber and the plastic. Particularly useful amounts of curing agent range from about 0.5 part to about 15 parts, or from about 0.5-10 parts, or from about 0.5-5 parts, or from about 0.5-4 parts, or from about 0.5-3 parts, from about 1-4 parts, or from about 1-5 parts, or from about 2-4 parts, or from about 2-5 parts, or from about 2-6 parts, or from about 3-6 parts, or from about 4-7 parts, or from about 4-8 parts, or from about 5-8 parts, based on 100 parts of rubber and plastic.

In certain aspects, oxazoline curing agents are used to avoid degradation of the TPV plastic phase and allow selective addition crosslinking of the rubber. In certain aspects, oxazoline curing agents avoid product processability problems that can be caused by volatile by-products from the curing reaction being trapped in the TPV melt.

The addition curatives effect cross-linking by reacting with the carboxylic acid groups present in the rubber or double bonds of the diene hydrocarbon portion derived from the diene monomer. The amount of curatives used results in at least a partially cured rubber and preferably a fully or completely vulcanized rubber.

The terms "fully vulcanized" and "completely vulcanized" as used in the specification and claims means that the rubber component to be vulcanized has been cured to a state in which the elastomeric properties of the cross-linked rubber are similar to those of the rubber in its conventional vulcanized state, apart from the thermoplastic vulcanizate composition, or as indicated by no more change in tensile strength. The degree of cure can be described in terms of gel content or, conversely, extractable components. Alternatively, the degree of cure may be expressed in terms of cross-link density. All of these descriptions are well known in the art, for example, in U.S. Pat. Nos. 5,100,947 and 5,157,081, both of which are fully incorporated herein by this reference. By the term "partially vulcanized" (i.e., degree of cure), it is meant that about 30 percent or less and desirably about 10 percent or less by weight of an acrylate rubber is soluble in methyl ethyl ketone at 80°C. By the term "fully vulcanized" (i.e., degree of cure), it is meant that about 5 percent or less of the cured acrylate rubber is soluble in a methyl ethyl ketone at 80°C.

### Plasticizer

Thermoplastic vulcanizates of Embodiments 1 and 2 can further comprise a plasticizer that is melt miscible with both the rubber phase and the plastic phase. Suitable plasticizers for use herein are selected from polyols, polyester ethers, polyesters, polyethers, ester terminated poly butylene adipates, sulfonamides, and mixtures thereof. Also suitable are plasticizers which are used for polyvinyl chloride (PVC). Plasticizers that are melt miscible with the TPV plastic phase, or rubber phase, or both, are useful in certain aspects of this disclosure. In certain embodiments, the plasticizer is not melt-miscible with either the rubber phase or the plastic phase.

When present, the amount of plasticizer ranges from about 4 parts to about 35 parts, based on 100 parts of rubber and plastic phases in the formulation. Suitable amounts of plasticizer, based on 100 parts of rubber and plastic phases, in the TPV formulations are about 4 parts, about 10 parts, about 15 parts, about 20 parts, about 25 parts, about 30 parts, and about 35 parts.

In certain aspects of this disclosure, TPV formulations comprise about 25 parts to about 70 parts of plastic, and from about 75 parts to about 30 parts of ACM, in addition to an effective amount of a plasticizer. Effective amounts of the plasticizer are from about 4 parts or 8 parts to about 35 parts per 100 parts of rubber and plastic phases. Other suitable amounts of plasticizer, based on 100 parts of rubber and plastic, in the TPV formulations are 4 to 25 parts, about 5 to 15 parts, about 8-15 parts, about 8 to 20 parts, about 4 parts, about 5 parts, about 6 parts, about 7 parts, about 8 parts, about 9 parts, about 10 parts, about 11 parts, about 12 parts, about 13 parts, about 14 parts, about 15 parts, about 16 parts, about 17 parts, about 20 parts, about 25 parts, about 30 parts, or about 35 parts.

In certain aspects, a plasticizer is incorporated into the TPV formulation to achieve processable (low enough melt viscosity, excellent fabricated product surface appearance) TPV compositions with plastic content of about 70 weight per cent or lower, based on only the rubber and plastic in the composition. In certain situations, at this level of plastic, lack of plasticizer results in some molding machines being incapable of fabricating the TPV melt due to high viscosity, or the fabricated product exhibits severe melt fracture. The plasticizer is preferably miscible with the TPV plastic phase only, although plasticizers that are miscible with both the TPV rubber and plastic phase are also acceptable.

### Plasticizers for ACM

Low volatility ether ester plasticizers such as TP-90B, TP-95, TP-759, Tegmer 39-N, 804S, 809, 810, and 812 (all of which are commercially available from Hallstar International) are suitable for ACM. Plasthall series ester plasticizers such as, Plasthall TOTM, are also useful. A description of the structures of some of these plasticizers can be found in Rubber World p. 32, April 2015.

### Plasticizers for TPUs

TPUs are typically miscible only to a limited extent with plasticizers after a polymer/plasticizer melt blend crystallizes at room temperature. Hence, for TPVs made with TPU as the plastic phase, it is important that any plasticizer rejected on crystallization of the plastic phase be absorbed by the particulate rubber contained therein. Examples of suitable plasticizers for TPUs are Benzoflex^{™} 9-88, Benzoflex^{™} 9-88 SG, Benzoflex^{™} TPU-405, and TXIB^{™}, all of which are commercially available from Eastman). Other suitable plasticizers are Plasthall 190 and TP-95, both are available from Hallstar.

### Adhesion Promoters

In certain aspects, the thermoplastic vulcanizates of Embodiments 1 and 2 include an adhesion promoter.

Suitable adhesion promoters include maleated polyolefins and maleated vinylidene fluoride polymers or copolymers.

Other suitable adhesion promoters are polypropylene, polyethylene, or vinylidene fluoride/hexafluoropropylene copolymer with 0.1 weight % to about 3 weight % of maleate group content.

Examples of suitable adhesion promotors are Bondyram 1101^{®} and Bodyram^{®}, both of which are Polypropylene-g-maleic anhydrides that are commercially available from Polyram.

Suitable amounts of adhesion promotor are from about 1-25 parts by weight, based on 100 parts by weight of the plastic and rubber phases. Particularly suitable amounts of adhesion promoter, based on 100 parts of rubber and plastic, in the TPV formulations are about 0.5 to 20 parts, about 0.5 to 15 parts, about 0.5 to 12 parts, about 1 part, about 2 parts, about 3 parts, about 4 parts, about 5 parts, about 6 parts, about 7 parts, about 8 parts, about 9 parts, about 10 parts, about 11 parts, about 12 parts, about 13 parts, about 14 parts, about 15 parts, about 16 parts, about 17 parts, about 18 parts, about 19 parts, or about 20 parts.

Preferably, the adhesion promoter is blended into the thermoplastic vulcanizate subsequent to compounding, i.e., subsequent to completion of vulcanization, i.e., the reaction that takes place upon exposing a blend of the plastic and rubber phases to conditions that permit crosslinking. Alternatively, the adhesion promoter may be blended into the thermoplastic vulcanizate after the vulcanization is 50%, 60%, 70%, 80%, 90%, 95% or substantially complete.

### Cure Accelerators

In certain aspects, the thermoplastic vulcanizates disclosed herein can further comprise a cure accelerator selected from aryl phosphites, alkyl phosphites, aryl/alkyl phosphite, and mixtures thereof. Particular cure accelerators suitable for use herein are selected from tris(2,4-di-t-butylphenyl) phosphite, bis(2,4-di-t-butylphenyl)pentaerythritol diphosphite, and mixtures thereof.

### Optional Additives

In addition to the thermoplastic polymer, acrylate rubber, the processing aid, and the curing agent, the thermoplastic vulcanizates disclosed herein can include various conventional additives such as reinforcing and non-reinforcing fillers, extenders, antioxidants, antiozonants, stabilizers, rubber processing oil, extender oils, processing aids, lubricants, plasticizers, anti-blocking agents, anti-static agents, waxes, foaming agents, pigments, flame retardants and other processing aids known in the rubber compounding art. Such additives can comprise up to about 60 weight percent of the total composition, and can be in the plastic phase, the rubber phase or both. Fillers and extenders which can be utilized include conventional inorganics such as calcium carbonate, clays, silica, talc, titanium dioxide, carbon black, and the like. The rubber processing oils generally are paraffinic, naphthenic or aromatic oils derived from petroleum fractions. The type will be that ordinarily used in conjunction with the specific rubber or rubbers present in the compositions, and the quantity based on the total rubber content may range from zero to about 100 parts per weight, based on 100 parts by weight of the plastic and rubber phases and preferably from about 10 to about 40 parts per weight, based on 100 parts by weight of the plastic and rubber phases.

### Use

The thermoplastic vulcanizate compositions of this disclosure can be used in applications wherever acrylate rubber is used. The thermoplastic vulcanizates disclosed herein may be formed into a variety of products, including for example gaskets, tubes, hose, boots, seals, vibration dampeners, stators, fittings, housings, cases, films, shock absorbers, anti-vibration mounts, couplings, bushings, sleeves, bellows, foams, etc. The thermoplastic vulcanizates disclosed herein are particularly useful for manufacturing tubes and hoses comprising at least one layer comprising thermoplastic vulcanizate. The thermoplastic vulcanizates disclosed herein are particularly useful for use in automobiles.

Thus, they can be utilized as seals, as gaskets, hoses, boots, and the like, especially for automotive applications. The TPVs of this disclosure are particularly useful for making hoses, especially hoses that comprise multiple layers wherein at least one layer is a jacket or core tube formed from a TPV of this disclosure. The jacket or core tube can include one or more layers formed from a TPV of this disclosure (where multiple jacket or core tube layers may be the same or a different TPV of this disclosure), optionally in combination with a jacket or core tube layer made from one or more other materials.

The invention will be better understood by reference to the following examples which serve to illustrate, but not to limit, the present invention.

### Process

This disclosure also provides processes for producing thermoplastic vulcanizate. In certain embodiments, the processes comprise mixing a composition comprising a plastic phase and a rubber phase with an addition type curing agent. The mixing is typically carried out under mixing conditions that produce shear with an appropriate shear profile and at a temperature above the melting point of the plastic phase.

This invention is best practiced using equipment that can blend polymeric materials at a shear rate that permits intimate material melt blending, but at a shear rate that is low enough to prevent excessive material thermal and thermo-oxidative degradation, and also mechano-chemical degradation, due to shearing forces. The residence time (about 2 minutes) of the polymer melt blend in the production equipment is also comparable to that used in commercially viable TPV manufacturing processes.

Adequate process temperature control and polymer melt blending using minimal shearing of the polymer melt blend is advantageous. The TPVs disclosed herein can be prepared using corotating or counter rotating twin screw extruders (TSEs), with elements that allow excellent polymer melt blending at low shear rate conditions (<5000 s⁻¹).

A particularly suitable single screw extruder for preparation of the TPVs of this invention is the Buss Kneader. Here, a reciprocating single screw, where the screw shaft consists of different elements (kneading, conveying, etc.) shears the polymer melt blend by the action of the screw elements on fixed (but adjustable) pins on the extruder barrel. Thus, intense polymer melt blending can be achieved at a low shear rate (<1100 s⁻¹), resulting in excellent polymer melt temperature control. Owing to the low shear rate profile of the Buss when compared to TSEs, the former machine is much less torque limited than the latter. The plastic phase useful in the processes comprises from about 25 parts to about 95 parts by weight, based on 100 parts by weight of the plastic and rubber phases, of a thermoplastic polyurethane. Suitable materials for use as the plastic phase are those described hereinabove.

Then rubber phase useful in the processes for preparing the thermoplastic vulcanizate comprises from about 75 parts to about 5 parts, by weight based on 100 parts by weight of the plastic and rubber phases, of an acrylate rubber. Suitable materials for use as the rubber phase are those described hereinabove.

A desirable degree of cross-linking, i.e., partial or complete, can be achieved by adding one or more of the above-noted rubber curatives to the blend of a thermoplastic or the thermoplastic elastomer and acrylate rubber and vulcanizing the rubber to the desired degree under conventional vulcanizing conditions, preferably using dynamic vulcanization. Dynamic vulcanization is affected by mixing the thermoplastic vulcanizate components at elevated temperature in conventional mixing equipment such as roll mills, Banbury mixers, Brabender mixers, continuous mixers, mixing extruders, and the like. The unique characteristic of dynamically cured compositions is that, notwithstanding the fact that the rubber component is partially or fully cured, the compositions can be processed and reprocessed by conventional plastic processing techniques such as extrusion, injection molding, blow molding and compression molding. Scrap or flashing can be salvaged and reprocessed.

In certain embodiments of the processes disclosed herein, the rubber phase and the plastic phase are melt blended prior to the addition of the addition type curing agent.

In certain embodiments of the processes disclosed herein, the rubber phase and the plastic phase are melt blended while the curing agent is added to the composition.

In certain embodiments of the processes disclosed herein, the process comprises:
prior to melt blending with the rubber, melt blending the plastic phase with a predetermined amount of rubber curative to form a blend of curing agent and plastic;
mixing the blend of curing agent and plastic with the rubber phase to form a blend of plastic phase and rubber phase, and
adding additional curing agent to the blend of rubber phase and plastic phase with continued melt mixing.

Thus, for example, half of the amount of curing agent necessary for partial vulcanization (crosslinking) can be combined with the plastic phase prior to melt blending, and the other half added after an initial period of time during which melt blending is carried out for complete vulcanization.

Melt blending the plastic phase with a predetermined amount of rubber curative, i.e., forming a blend of curing agent and plastic, acts to functionalize the plastic acid end groups and to minimize plastic chain extension and residual rubber curing agent in the plastic phase.

In certain embodiments of the processes disclosed herein, the mixing conditions are such that a maximum shear rate in the process is less than 10,000 s⁻¹, or 7000 s⁻¹ or 3000 s⁻¹. In other embodiments, the maximum shear rate is less than 5000s⁻¹.

In certain embodiments of the processes disclosed herein, the composition is prepared by melt blending the plastic phase with the curing agent to form a plastic phase/curing agent blend, and melt blending the plastic phase/curing agent blend with the rubber phase.

In certain embodiments of the processes disclosed herein, the composition further comprises a cure accelerator selected from aryl phosphites, alkyl phosphites, aryl/alkyl phosphite, and mixtures thereof. Particular cure accelerators suitable for use in the processes disclosed herein are selected from tris(2,4-di-t-butylphenyl) phosphite, bis(2,4-di-t-butylphenyl)pentaerythritol diphosphite, and mixtures thereof.

In certain embodiments of the processes disclosed herein, the cure accelerator is added to the mixture at any time during the process.

In certain embodiments of the processes disclosed herein, a plasticizer as described above can be introduced as plasticizer when convenient and appropriate during the process.

The present invention will be better understood by reference to the following examples, which serve to illustrate, but not limit, the practice of this invention.

### Examples

### General Procedure

Figure 1 is a diagram of the barrels of a twin-screw extruder suitable for use in the following examples. The equipment blends polymeric materials at a shear rate that permits intimate material melt blending, but at a shear rate that is low enough to prevent excessive material thermal and thermo-oxidative degradation, and also mechano-chemical degradation, due to shearing forces. The residence time of the polymer melt blend in the production equipment is about 2 minutes.

Plastic pellets and granulated rubber (dusted with clay) are fed into the throat of a 26 mm co-rotating twin screw extruder. After intimate rubber and plastic melt blending is achieved, addition type curing agent (1,3-PBO or 2,6-PyBO) is fed into the polymer melt blend with intensive mixing which initiates the dynamic vulcanization process. Precautions (barrel cooling, screw design) are taken to limit shear heating (due to the viscous drag of the molten plastic over the newly formed cross-linked rubber particles) in the dynamic vulcanization zone as the ACM is broken up into cross-linked particulate rubber, about 1µm to 10µm in diameter.

When used, plasticizer may be added to the polymer melt blend prior to dynamic vulcanization for temperature control, provided that curative dilution due to plasticizer addition does not preclude completion of cure in the dynamic vulcanization zone. Alternatively, part or all of the plasticizer can be added downstream after completion of dynamic vulcanization.

The curing agent, typically a powder, can be supplied directly to the extruder feed throat. Alternatively, the curing agent can be supplied as a powder coating or dusting on the rubber granules. As another alternative, the curing agent may also be melt blended with the plastic phase, pelletized, and the resulting pellets consisting of a blend of curing agent and plastic can subsequently be used for TPV preparation. Melt blending the curing agent with the plastic prior to mixing with the rubber permits the curative to end-functionalize the carboxylic acid moieties of the plastic macromolecules which compatibilizes the plastic with the rubber and limits chain extension of the plastic macromolecules.

### Materials

### Rubber Material

| **Trade Name** | **Description** |
|---|---|
| HyTemp 4053EP | Zeon: (Baled rubber) Acrylic Elastomer, ML(1+4, 100°C)=27. |
| HyTemp 4065 | Zeon: (Baled rubber) Acrylic Elastomer, ML(1+4, 100°C)=36. |

### Plastic Material

| **Trade Name** | **Description** |
|---|---|
| Elastollan WY 1141 | BASF: (Pellets) Polyether-based TPU, m.p. =150-230⁰C, Intermediate molecular weight product, Melt Flow Index (210⁰C, 10 kg) = 40-60 g/10min |
| Elastollan 754 D 15 HPM 000 | BASF: (Pellets) Polyester-based TPU, m.p. =180-230°C |

### Curing Agent

| **Trade Name** | **Description** |
|---|---|
| 1,3-PBO | EVONIK: (Powder) 2,2'-(1,3-Phenylene)bis (oxazoline-2), m.p.= 147⁰C-151⁰C. |

### Antioxidant

| **Trade Name** | **Description** |
|---|---|
| Antioxidant 405 | AKROCHEM: (Powder) 4,4'-Bis-(α,α-dimethylbenzyl)diphenylamine |

### Adhesion Promoter

| **Trade Name** | **Description** |
|---|---|
| Bondyram 1101 | POLYRAM: (Pellets) Polypropylene-g-maleic anhydride (1 wt%), Melt Flow Index (190⁰C, 2.16 kg) = 170 g/10 min |
| Bondyram 4108 | POLYRAM: (Pellets) Polyethylene-g-maleic anhydride (0.9 wt%), Melt Flow Index (190⁰C, 2.16 kg) = 1.0 g/10 min |

### Plasticizer

| **Trade Name** | **Description** |
|---|---|
| Uniplex 214 (BBSA) | LANXESS: (Liquid) N-n-butylbenzene sulfonamide, b.p. 314°C. |

### TPV compounding/extrusion

The TPU/ACM TPVs of this disclosure can be compounded in a batch mixer (e.g. RSI's Techmix 6) or a in continuous twin-screw extruder (e.g. Coperion ZSK 26) or a reciprocating kneader (e.g. BUSS Kneader MX-30).

TPVs of this disclosure made with TPU and ACM are reactively compounded on a ZSK 26 mm, 10-barrel, co-rotating, Coperion two-lobe twin screw extruder having a LID = 40 and barrels such as those shown in Figure 1. The maximum torque per screw shaft for this extruder is 106 Nm, the maximum allowable horsepower is 36 HP, and the maximum allowable screw speed is 1200 RPM.

### The barrels of this extruder are:

### Barrel #1 (Unheated): Conveying elements

Barrel #s 2 -3: Kneading elements to melt plastic materials and to produce an intimate rubber and plastic melt blend.

Barrel #s 4-8: Dynamic vulcanization zone: a combination of kneading elements ensures intensive polymer melt blending during dynamic vulcanization, while limiting rise in polymer melt blend temperature and pressure.

### Barrel #s 9-10: Conveying elements.

### Die: 3-hole

Material is fed into the extruder at an appropriate rate and screw speed selected to permit sufficient residence time for dynamic vulcanization to take place.

Plastic pellets and clay-dusted granulated rubber are fed into the hopper attached to barrel #1. Curing agent, 1,3-PBO, and Antioxidant 405, both as powders, are either fed together into barrel #4 via a side feeder or antioxidant into barrel #1 and curative into the melt blend of plastic/curative (prepared as described below).

Barrel temperatures are selected based on melting points and/or softening points of the plastic and other TPV components. Barrel temperatures should be adjusted to avoid component decomposition.

### After extrusion, strands are water cooled, pelletized, and dried.

Barrels #4 and #9 are vented to the atmosphere, and the screw design facilitates the formation of a melt seal on both sides of these barrels.

### Preparation of pellets consisting of a blend of curing agent and plastic

Melt blends of thermoplastic pellets and the curative powder are made with a lowintensity mixing screw, with barrel set temperatures low enough to just melt the resin and mix with the powder. Plastic pellets are fed into the extruder feed throat, while the powder is added though the side feeder.

### Laboratory Batch Mixer

A Techmix 6 (RSI) or Haake Rheomix^{™} 3000 (Thermofisher) mixer with three heating zones is used and connected to an ATR Plasti-Corder (C.W. Brabender) torque rheometer for temperature and torque control. The three zones and the stock temperature are set at temperatures above the melting point of the plastic phase. The mixing conditions are as follows: 5-15 minutes of total mixing time, 65-75% fill factor, 50-150 RPM rotor speed for Banbury rotors. The plastic and the rubber are first added to the mixer and then the curative, the antioxidant, the plasticizer, and the other components (if any) can be added at any time during the mixing process.

### Single screw extrusion

TPV pellets are extruded into tapes using a single screw extruder, for physical property and process-ability testing. Tensile dumbbells are cut from the tapes. TPV pellets are also injection molded into tensile bars, flex bars, and compression set buttons.

A Brabender single screw extruder (LID =25, 3/4" screw) is used and connected to an RS-5000 (RSI) torque rheometer for temperature and torque control. The extruder includes three heated zones (barrels set at 210°C), with the die temperature set at 220°C, for Elastollan WY1141 TPU grade. The extrusion temperatures are depended on the TPU grade. The screw consists of a small Maddock mixing section, with the remaining sections being built-up of conveying elements.

### Injection molding

A Sumitomo Systec 90-310 injection molding machine having three heated zones (barrel set temperatures: 185°C, 190°C, and 195°C, with nozzle set at 200°C is used for injection molding of TPVs containing Elastollan WY1141 as the TPU grade. The barrel temperatures are depended on the TPU grade. Screw speed is 150 rpm, with different formulation dependent holding pressures, typically between 11-18 MPa.

### Compression Molding Machine

A Wabash MPI's Genesis Series Hydraulic Press with heated and water-cooled steel platens is used for compression molding the samples into plaques. The TPV sample is first pressed for 2-5 minutes between the heated platens at temperatures above the melting point of the plastic phase, and for 2-5 minutes between the water-cooled plates.

### Property testing

Tensile (5 specimens), flexural modulus (3 specimens), hardness (5 measurements) and compression set (3 specimens) tests are conducted according to ASTM D638, ASTM D790, ASTM D2240, and ASTM D395 respectively. In all cases, the median test value is reported.
All quantities shown in the below tables are weight percentages unless otherwise specified.

### Example 1

TPV formulations compounded from HyTemp 4065 (ACM) and Elastollan WY1141 (thermoplastic polyurethane) at different rubber/plastic ratios (65/35 and 35/65), with 1,3-PBO as curing agent, are shown below in Table 1. These TPV formulations are prepared in the laboratory mixer. The formulations and the physical properties of the resulting ACM/TPU TPVs are shown below in Table 1.

**Table 1. Formulations in Weight% for HyTemp 4065/Elastollan WY1141 TPVs Made on Laboratory Mixer, Without any Processing Aid.**

| | **Thermoplastic Vulcanizate (TPV) formulation** | |
|---|---|---|
| **Formulation No.** | **1** | **2** |
| HyTemp 4065 | 61.32 | 33.98 |
| Elastollan WY1 141 | 33.02 | 63.11 |
| PBO | 3.77 | 1.94 |
| Antioxidant 405 | 1.89 | 0.97 |

| **Property** | | |
|---|---|---|
| Compression Molded: Tensile Strength @ RT (MPa) | 1.51 | 6.30 |
| Compression Molded: Elongation @ RT (%) | 98.00 | 140.00 |
| Hardness, Instantaneous (Shore A) | 53.20 | 86.60 |
| Hardness, Instantaneous (Shore D) | 11.10 | 21.80 |

### Example 2

TPV formulations compounded from HyTemp 4053EP (ACM) and Elastollan WY1141 (thermoplastic polyurethane) at different rubber/plastic ratios (65/35 and 35/65), with 1,3-PBO as curing agent, are shown below in Table 2. These TPV formulations are prepared in the laboratory mixer. The formulations and the physical properties of the resulting ACM/TPU TPVs are shown below in Table 2.

**Table 2. Formulations in Weight% for HyTemp 4053EP/Elastollan WY1141 TPVs Made on Laboratory Mixer, Without Using Any Processing Aid.**

| | **Thermoplastic Vulcanizate (TPV) formulation** | |
|---|---|---|
| **Formulation No.** | **3** | **4** |
| HyTemp 4053EP | 61.32 | 33.98 |
| Elastollan WY1 141 | 33.02 | 63.11 |
| PBO | 3.77 | 1.94 |
| Antioxidant 405 | 1.89 | 0.97 |

| **Property** | | |
|---|---|---|
| Compression Molded: Tensile Strength @ RT (MPa) | 1.98 | 6.78 |
| Compression Molded: Elongation @ RT (%) | 112.00 | 149.00 |
| Hardness, Instantaneous (Shore A) | 53.50 | 83.90 |
| Hardness, Instantaneous (Shore D) | 9.10 | 24.60 |

### Example 3

TPV formulations compounded from HyTemp 4053EP (ACM) and Elastollan WY1141 (thermoplastic polyurethane) at 75/25 rubber/plastic ratio, with 1,3-PBO as curing agent, with and without plasticizer (BBSA) are shown below in Table 3. These TPV formulations are prepared in the laboratory mixer. The formulations and the physical properties of the resulting ACM/TPU TPVs are shown below in Table 3.

**Table 3. Formulations in Weight% for HyTemp 4053EP/Elastollan WY1141 TPVs Made on Laboratory Mixer, Without Using Any Processing Aid.**

| | **Thermoplastic Vulcanizate (TPV) formulation** | |
|---|---|---|
| **Formulation No.** | **5** | **6** |
| HyTemp 4053EP | 71.43 | 65.22 |
| Elastollan WY1141 | 23.81 | 21.74 |
| PBO | 4.76 | 4.35 |
| BBSA | 0.00 | 8.70 |

| **Property** | | |
|---|---|---|
| Compression Molded: Tensile Strength @ RT (MPa) | 1.01 | 0.83 |
| Compression Molded: Elongation @ RT (%) | 96.00 | 59.00 |
| Hardness, Instantaneous (Shore A) | 38.20 | 34.90 |
| Hardness, Instantaneous (Shore D) | 9.50 | 8.70 |

### Example 4

A TPV formulation compounded from HyTemp 4053EP (ACM) and Elastollan 754 D 15 HPM 000 (thermoplastic polyurethane) at 75/25 rubber/plastic ratio, with 1,3-PBO as curing agent, is shown below in Table 4. This TPV formulation is prepared in the laboratory mixer. The formulation and the physical properties of the resulting ACM/TPU TPV are shown below in Table 4.

**Table 4. Formulation in Weight% for HyTemp 4053EP/Elastollan 754 D 15 HPM 000 TPV Made on Laboratory Mixer, Without Using Any Processing Aid.**

| | **Thermoplastic Vulcanizate (TPV) formulation** |
|---|---|
| **Formulation No.** | **7** |
| HyTemp 4053EP | 71.43 |
| Elastollan 754 D 15 HPM 000 | 23.81 |
| PBO | 4.76 |

| **Property** | |
|---|---|
| Compression Molded: Tensile Strength @ RT (MPa) | 1.32 |
| Compression Molded: Elongation @ RT (%) | 53.00 |
| Hardness, Instantaneous (Shore A) | 46.40 |
| Hardness, Instantaneous (Shore D) | 11.10 |

### Example 5

A TPV formulation compounded from HyTemp 4053EP (ACM) and Elastollan WY1141 (thermoplastic polyurethane) at 5/95 rubber/plastic ratio, with 1,3-PBO as curing agent, is shown below in Table 5. This TPV formulation is prepared in the laboratory mixer. The formulation and the physical properties of the resulting ACM/TPU TPV are shown below in Table 5.

**Table 5. Formulation in Weight% for HyTemp 4053EP/ Elastollan WY1141 TPV Made on Laboratory Mixer, Without Using Any Processing Aid.**

| | **Thermoplastic Vulcanizate (TPV) formulation** |
|---|---|
| **Formulation No.** | **8** |
| HyTemp 4053EP | **4**.98 |
| Elastollan WY1141 | 94.53 |
| PBO | 0.50 |

| **Property** | |
|---|---|
| Compression Molded: Tensile Strength @ RT (MPa) | **4**7.19 |
| Compression Molded: Elongation @ RT (%) | 369.00 |
| Hardness, Instantaneous (Shore A) | 90.20 |
| Hardness, Instantaneous (Shore D) | 43.50 |

### Example 6

TPV formulations compounded from HyTemp 4053EP (ACM) and Elastollan WY1141 (thermoplastic polyurethane) at different rubber/plastic ratios (10/90 and 45/55) with 1,3-PBO as curing agent, are shown below in Table 6. These TPV formulations are prepared in the twin-screw extruder. The properties of these formulations and the processing conditions used to produce them are also presented in Table 6.

**Table 6. Formulations in Weight% for HyTemp 4053EP/Elastollan WY1141 TPVs Made on Twin-Screw Extruder, Without any Processing Aid.**

| | **Thermoplastic Vulcanizate (TPV) formulation** | |
|---|---|---|
| **Formulation No.** | **9** | **10** |
| HyTemp 4053EP | 9.85 | 43.06 |
| Elastollan WY1141 | 88.67 | 52.63 |
| PBO | 1.48 | 4.31 |

| **Property** | | |
|---|---|---|
| Injection Molded: Tensile Strength @ RT (MPa) | 42.64 | 23.39 |
| Injection Molded: Elongation @ RT (%) | 278.10 | 294.10 |
| Injection Molded: Flexural Modulus @ RT (MPa) | 53.34 | 22.49 |
| Injection Molded: Compression Set @121°C, 70 hr (%) | 95.67 | 102.73 |
| Hardness, Instantaneous (Shore A) | 90.00 | 81.20 |
| Hardness, Instantaneous (Shore D) | 39.80 | 24.10 |

| **Twin-Screw Processing Conditions** | | |
|---|---|---|
| Screw Speed Range (RPM) | 100-300 | 100-300 |
| Feed rate Range (Ib/hr) | 30-100 | 30-100 |
| Average Torque (%) | 88 | 61 |

### Example 7

TPV formulations compounded from HyTemp 4053EP (ACM) and Elastollan WY1141 (thermoplastic polyurethane) at 30/70 rubber/plastic ratio, with 1,3-PBO as curing agent, and with two different adhesion promoters (Bondyram 4108 and Bondyram 1101), are shown below in Table 7. These TPV formulations are prepared in the twin-screw extruder. The adhesion promoter is added into the TPV subsequent to vulcanization. The properties of these formulations and the processing conditions used to produce them are also presented in Table 7.

**Table 7. Formulations in Weight% for Nipol 1072X28/ Elastollan WY1141 TPVs Made on Twin-Screw Extruder, With Adhesion Promoters.**

| | **Thermoplastic Vulcanizate (TPV) formulation** | |
|---|---|---|
| **Formulation No.** | **11** | **12** |
| HyTemp 4053EP | 26.55 | 26.55 |
| Elastollan WY1141 | 61.95 | 61.95 |
| PBO | 2.65 | 2.65 |
| Bondyram 4108 | 8.85 | - |
| Bondyram 1101 | - | 8.85 |

| **Property** | | |
|---|---|---|
| Injection Molded: Tensile Strength @ RT (MPa) | 24.05 | 25.24 |
| Injection Molded: Elongation @ RT (%) | 282 | 319 |
| Injection Molded: Flexural Modulus @ RT (MPa) | 42.66 | 74.75 |
| Injection Molded: Compression Set @121°C, 70 hr (%) | 98.77 | 99.48 |
| Hardness, Instantaneous (Shore A) | 88.20 | 89.70 |
| Hardness, Instantaneous (Shore D) | 30.10 | 30.10 |

| **Twin-Screw Processing Conditions** | | |
|---|---|---|
| Screw Speed Range (RPM) | 100-300 | 100-300 |
| Feed rate Range (lb/hr) | 70-170 | 70-170 |
| Average Torque (%) | 63 | 69 |

## Claims

1. A thermoplastic vulcanizate comprising a plastic phase and a rubber phase, wherein
a) the plastic phase comprises from about 25 parts to about 95 parts by weight, based on 100 parts by weight of the plastic and rubber phases, of a thermoplastic polyurethane with the hard segments having a melting point of about 130°C to about 240°C; and
b) the rubber phase comprises from about 75 parts to about 5 parts, by weight based on 100 parts by weight of the plastic and rubber phases, of the rubber which is a carboxylic acid cure site and/or chlorine cure site functional acrylate rubber, or an anhydride cure site functional acrylate rubber; and
c) crosslinks between reactive groups in the acrylate rubber.

2. A thermoplastic vulcanizate according to claim 1, wherein the crosslinks are formed by a reaction between an addition type curing agent and reactive groups in the acrylate rubber.

3. A thermoplastic vulcanizate according to claim 1, which is prepared by dynamically crosslinking a melt blend with an addition type curing agent, wherein the melt blend comprises a plastic phase and a rubber phase, and wherein
the plastic phase comprises from about 25 parts to about 95 parts by weight, based on 100 parts by weight of the plastic and rubber phases, of a thermoplastic polyurethane with the hard segments having a melting point of about 130°C to about 240°C; and
the rubber phase comprises from about 75 parts to about 5 parts, by weight based on 100 parts by weight of the plastic and rubber phases, of the rubber which is a carboxylic acid cure site and/or chlorine cure site functional acrylate rubber, or an anhydride cure site functional acrylate rubber.

4. A thermoplastic vulcanizate according to claim 1, wherein
the plastic phase comprises about 25 parts to about 70 parts by weight, based on 100 parts by weight of the plastic and rubber phases, of a thermoplastic polyurethane with the hard segments having a melting point of about 130°C to about 240°C, and
the rubber phase comprises from about 75 parts to about 30 parts, by weight based on 100 parts by weight of the plastic and rubber phases, of a rubber which is a carboxylic acid cure site and/or chlorine cure site functional acrylate rubber, an anhydride cure site functional acrylate rubber.

5. A thermoplastic vulcanizate according to claim 1, wherein
the plastic phase comprises about 70 parts to about 95 parts by weight, based on 100 parts by weight of the plastic and rubber phases, of the plastic, and the plastic is a thermoplastic polyurethane with the hard segments having a melting point of about 130°C to about 240°C, and the rubber phase comprises from about 30 parts to about 5 parts, by weight based on 100 parts by weight of the plastic and rubber phases, of a rubber which is a carboxylic acid cure site and/or chlorine cure site functional acrylate rubber, or an anhydride cure site functional acrylate rubber.

6. A thermoplastic vulcanizate according to claim 1, wherein
the plastic phase comprises about 25 parts to about 50 parts by weight, based on 100 parts by weight of the plastic and rubber phases, of a plastic, and the plastic is a thermoplastic polyurethane with the hard segments having a melting point of about 130°C to about 240°C, and
the rubber phase comprises from about 75 parts to about 50 parts, by weight based on 100 parts by weight of the plastic and rubber phases, of the rubber which is a carboxylic acid cure site and/or chlorine cure site functional acrylate rubber, or an anhydride cure site functional acrylate rubber.

7. A thermoplastic vulcanizate according to claim 1, further comprising a plasticizer.

8. A thermoplastic vulcanizate according to claim 7, wherein the amount of plasticizer in the thermoplastic vulcanizate is from about 4 parts to about 35 parts, based on 100 parts by weight of the plastic and rubber phases.

9. A thermoplastic vulcanizate according to claim 2, wherein the addition type curing agent is a multifunctional oxazoline or epoxide.

10. A thermoplastic vulcanizate according to claim 2, wherein the thermoplastic vulcanizate comprises from about 0.5 part to about 15 parts, based on 100 parts by weight of the plastic and rubber phases, of the addition type curing agent.

11. A thermoplastic vulcanizate according to claim 2 wherein the addition type curing agent is 2,2'-(1,3-phenylene)bis(2-oxazoline), or 2,2'-(1,4-phenylene)bis(2-oxazoline), or 2,2'-(2,6-pyridylene)bis(2-oxazoline), or mixtures thereof.

12. A thermoplastic vulcanizate according to claim 1 where greater than 80 weight per cent of the rubber is crosslinked.

13. A gasket, tube, hose, seal, vibration dampener, stator, fitting, housing, case, film, shock absorber, anti-vibration mount, coupling, bushing, sleeve, or bellows, or foam comprising a thermoplastic vulcanizate according to claim 1.

14. A tube or hose comprising at least one layer comprising a thermoplastic vulcanizate according to claim 1.

15. A process for producing a thermoplastic vulcanizate comprising mixing a composition comprising a plastic phase and a rubber phase with an addition type curing agent, wherein the mixing is carried out under mixing conditions that produce an appropriate shear profile and at a temperature above the melting point of the plastic phase, and wherein
the plastic phase comprises from about 25 parts to about 95 parts by weight, based on 100 parts by weight of the plastic and rubber phases, of a thermoplastic polyurethane with the hard segments having a melting point of about 130°C to about 240°C ; and
the rubber phase comprises from about 75 parts to about 5 parts, by weight based on 100 parts by weight of the plastic and rubber phases, of the rubber which is a carboxylic acid cure site and/or chlorine cure site functional acrylate rubber, or an anhydride cure site functional acrylate rubber.

16. A process according to claim 15, wherein the rubber phase and the plastic phase are melt blended prior to the addition of the addition type curing agent.

17. A process according to claim 15, wherein the rubber phase and the plastic phase are melt blended while the addition type curing agent is added to the composition.

18. A process according to claim 15, wherein the process comprises:
prior to melt blending with the rubber, melt blending the plastic phase with a predetermined amount of addition type curing agent to form a blend of curing agent and plastic;
mixing the blend of curing agent and plastic with the rubber phase to form a blend of plastic phase and rubber phase.

19. A process according to claim 18, further comprising adding additional addition type curing agent to the blend of rubber phase and plastic phase with continued melt mixing.

20. A thermoplastic elastomer comprising a plastic phase and a rubber phase, wherein
a) the plastic phase comprises from about 25 parts to about 95 parts by weight, based on 100 parts by weight of the plastic and rubber phases, of a thermoplastic polyurethane with the hard segments having a melting point of about 130°C to about 240°C, and
b) the rubber phase comprises from about 75 parts to about 5 parts, by weight based on 100 parts by weight of the plastic and rubber phases, of the rubber which is a carboxylic acid cure site and/or chlorine cure site functional acrylate rubber, or an anhydride cure site functional acrylate rubber.

## Patentansprüche

1. Ein thermoplastisches Vulkanisat, das eine Kunststoffphase und eine Kautschukphase beinhaltet, wobei
a) die Kunststoffphase zu etwa 25 bis etwa 95 Gewichtsteilen, bezogen auf 100 Gewichtsteile der Kunststoff- und Kautschukphasen, ein thermoplastisches Polyurethan beinhaltet, wobei die harten Segmente einen Schmelzpunkt von etwa 130 °C bis etwa 240 °C aufweisen; und
b) die Kautschukphase zu etwa 75 bis etwa 5 Gewichtsteilen, bezogen auf 100 Gewichtsteile der Kunststoff- und Kautschukphasen, den Kautschuk beinhaltet, der ein Carbonsäure-Cure-Site- und/oder funktioneller Chlor-Cure-Site-Acrylatkautschuk oder ein funktioneller Anhydrid-Cure-Site-Acrylatkautschuk ist; und
c) Vernetzungen zwischen reaktiven Gruppen in dem Acrylatkautschuk.

2. Thermoplastisches Vulkanisat gemäß Anspruch 1, wobei die Vernetzungen durch eine Reaktion zwischen einem Härtungsmittel des Additionstyps und reaktiven Gruppen in dem Acrylatkautschuk gebildet werden.

3. Thermoplastisches Vulkanisat gemäß Anspruch 1, das durch dynamisches Vernetzen eines Schmelzgemischs mit einem Härtungsmittel des Additionstyps hergestellt wird, wobei das Schmelzgemisch eine Kunststoffphase und eine Kautschukphase beinhaltet und wobei
die Kunststoffphase zu etwa 25 bis etwa 95 Gewichtsteilen, bezogen auf 100 Gewichtsteile der Kunststoff- und Kautschukphasen, ein thermoplastisches Polyurethan beinhaltet, wobei die harten Segmente einen Schmelzpunkt von etwa 130 °C bis etwa 240 °C aufweisen; und
die Kautschukphase zu etwa 75 bis etwa 5 Gewichtsteilen, bezogen auf 100 Gewichtsteile der Kunststoff- und Kautschukphasen, den Kautschuk beinhaltet, der ein Carbonsäure-Cure-Site- und/oder funktioneller Chlor-Cure-Site-Acrylatkautschuk oder ein funktioneller Anhydrid-Cure-Site-Acrylatkautschuk ist.

4. Thermoplastisches Vulkanisat gemäß Anspruch 1, wobei
die Kunststoffphase zu etwa 25 bis etwa 70 Gewichtsteilen, bezogen auf 100 Gewichtsteile der Kunststoff- und Kautschukphasen, ein thermoplastisches Polyurethan beinhaltet, wobei die harten Segmente einen Schmelzpunkt von etwa 130 °C bis etwa 240 °C aufweisen; und die Kautschukphase zu etwa 75 bis etwa 30 Gewichtsteilen, bezogen auf 100 Gewichtsteile der Kunststoff- und
Kautschukphasen, einen Kautschuk beinhaltet, der ein Carbonsäure-Cure-Site- und/oder funktioneller Chlor-Cure-Site-Acrylatkautschuk, ein funktioneller Anhydrid-Cure-Site- Acrylatkautschuk ist.

5. Thermoplastisches Vulkanisat gemäß Anspruch 1, wobei
die Kunststoffphase zu etwa 70 bis etwa 95 Gewichtsteilen, bezogen auf 100 Gewichtsteile der Kunststoff- und Kautschukphasen, den Kunststoff beinhaltet und der Kunststoff ein thermoplastisches Polyurethan ist, wobei die harten Segmente einen Schmelzpunkt von etwa 130 °C bis etwa 240 °C aufweisen,
und die Kautschukphase zu etwa 30 bis etwa 5 Gewichtsteilen, bezogen auf 100 Gewichtsteile der Kunststoff- und Kautschukphasen, einen Kautschuk beinhaltet, der ein Carbonsäure-Cure-Site- und/oder funktioneller Chlor-Cure-Site-Acrylatkautschuk oder ein funktioneller Anhydrid-Cure-Site-Acrylatkautschuk ist.

6. Thermoplastisches Vulkanisat gemäß Anspruch 1, wobei
die Kunststoffphase zu etwa 25 bis etwa 50 Gewichtsteilen, bezogen auf 100 Gewichtsteile der Kunststoff- und Kautschukphasen, einen Kunststoff beinhaltet, und der Kunststoff ein thermoplastisches Polyurethan ist, wobei die harten Segmente einen Schmelzpunkt von etwa 130 °C bis etwa 240 °C aufweisen; und
die Kautschukphase zu etwa 75 bis etwa 50 Gewichtsteilen, bezogen auf 100 Gewichtsteile der Kunststoff- und Kautschukphase, den Kautschuk beinhaltet, der ein Carbonsäure-Cure-Site- und/oder funktioneller Chlor-Cure-Site-Acrylatkautschuk oder ein funktioneller Anhydrid-Cure-Site-Acrylatkautschuk ist.

7. Thermoplastisches Vulkanisat gemäß Anspruch 1, das ferner einen Weichmacher beinhaltet.

8. Thermoplastisches Vulkanisat gemäß Anspruch 7, wobei die Menge an Weichmacher in dem thermoplastischen Vulkanisat etwa 4 Teile bis etwa 35 Teile, bezogen auf 100 Gewichtsteile der Kunststoff- und Kautschukphasen, beträgt.

9. Thermoplastisches Vulkanisat gemäß Anspruch 2, wobei das Härtungsmittel des Additionstyps ein multifunktionelles Oxazolin oder Epoxid ist

10. Thermoplastisches Vulkanisat gemäß Anspruch 2, wobei das thermoplastische Vulkanisat zu etwa 0,5 Teilen bis etwa 15 Teilen, bezogen auf 100 Gewichtsteile der Kunststoff- und Kautschukphasen, das Härtungsmittel des Additionstyps beinhaltet.

11. Thermoplastisches Vulkanisat gemäß Anspruch 2, wobei das Härtungsmittel des Additionstyps 2,2'-(1 ,3-Phenylen)bis(2-oxazolin) oder 2,2'-(1 ,4-Phenylen)bis(2-oxazolin) oder 2,2'-(2,6-Pyridylen)bis(2-oxazolin) oder Mischungen davon ist.

12. Thermoplastisches Vulkanisat gemäß Anspruch 1, wobei mehr als 80 Gewichtsprozent des Kautschuks vernetzt sind.

13. Eine Dichtung, ein Rohr, ein Schlauch, eine Versiegelung, ein Schwingungsdämpfer, ein Stator, ein Anschlussstück, ein Gehäuse, eine Hülle, ein Film, ein Stoßdämpfer, eine schwingungsdämpfende Halterung, eine Kopplung, eine Buchse, eine Hülse oder ein Faltenbalg oder ein Schaum, der/die/das ein thermoplastisches Vulkanisat gemäß Anspruch 1 beinhaltet.

14. Ein Rohr oder ein Schlauch, das/der mindestens eine Schicht beinhaltet, die ein thermoplastisches Vulkanisat gemäß Anspruch 1 beinhaltet.

15. Ein Verfahren zum Produzieren eines thermoplastischen Vulkanisats, das das Mischen einer Zusammensetzung, die eine Kunststoffphase und eine Kautschukphase beinhaltet, mit einem Härtungsmittel des Additionstyps beinhaltet, wobei das Mischen unter Mischbedingungen, die ein angemessenes Scherprofil produzieren, und bei einer Temperatur über dem Schmelzpunkt der Kunststoffphase ausgeführt wird, und wobei
die Kunststoffphase zu etwa 25 bis etwa 95 Gewichtsteilen, bezogen auf 100 Gewichtsteile der Kunststoff- und Kautschukphasen, ein thermoplastisches Polyurethan beinhaltet, wobei die harten Segmente einen Schmelzpunkt von etwa 130 °C bis etwa 240 °C aufweisen; und
die Kautschukphase zu etwa 75 bis etwa 5 Gewichtsteilen, bezogen auf 100 Gewichtsteile der Kunststoff- und Kautschukphase, den Kautschuk beinhaltet, der ein Carbonsäure-Cure-Site- und/oder funktioneller Chlor-Cure-Site-Acrylatkautschuk oder ein funktioneller Anhydrid-Cure-Site-Acrylatkautschuk ist.

16. Verfahren gemäß Anspruch 15, wobei die Kunststoffphase und die Kautschukphase vor der Zugabe des Härtungsmittels des Additionstyps schmelzgemischt werden.

17. Verfahren gemäß Anspruch 15, wobei die Kautschukphase und die Kunststoffphase schmelzgemischt werden, während das Härtungsmittel des Additionstyps zu der Zusammensetzung zugegeben wird.

18. Verfahren gemäß Anspruch 15, wobei das Verfahren Folgendes beinhaltet:
vor dem Schmelzmischen mit dem Kautschuk Schmelzmischen der Kunststoffphase mit einer vorbestimmten Menge Härtungsmittel des Additionstyps, um ein Gemisch aus Härtungsmittel und Kunststoff zu bilden;
Mischen des Gemisches aus Härtungsmittel und Kunststoff mit der Kautschukphase, um ein Gemisch aus Kunststoffphase und Kautschukphase zu bilden.

19. Verfahren gemäß Anspruch 18, das ferner die Zugabe von zusätzlichem Härtungsmittel des Additionstyps zu dem Gemisch aus Kautschukphase und Kunststoffphase unter kontinuierlichem Schmelzmischen beinhaltet.

20. Ein thermoplastisches Elastomer, das eine Kunststoffphase und eine Kautschukphase beinhaltet, wobei
a) die Kunststoffphase zu etwa 25 bis etwa 95 Gewichtsteilen, bezogen auf 100 Gewichtsteile der Kunststoff- und Kautschukphasen, ein thermoplastisches Polyurethan beinhaltet, wobei die harten Segmente einen Schmelzpunkt von etwa 130 °C bis etwa 240 °C aufweisen; und
b) die Kautschukphase zu etwa 75 bis etwa 5 Gewichtsteilen, bezogen auf 100 Gewichtsteile der Kunststoff- und Kautschukphasen, den Kautschuk beinhaltet, der ein Carbonsäure-Cure-Site- und/oder funktioneller Chlor-Cure-Site-Acrylatkautschuk oder ein funktioneller Anhydrid-Cure-Site-Acrylatkautschuk-ist.

## Revendications

1. Un vulcanisat thermoplastique comprenant une phase plastique et une phase caoutchouc, dans lequel
a) la phase plastique comprend d'environ 25 parties à environ 95 parties en poids, rapporté à 100 parties en poids des phases plastique et caoutchouc, d'un polyuréthane thermoplastique dont les segments durs présentent un point de fusion d'environ 130 °C à environ 240 °C ; et
b) la phase caoutchouc comprend d'environ 75 parties à environ 5 parties, en poids rapporté à 100 parties en poids des phases plastique et caoutchouc, du caoutchouc qui est un caoutchouc d'acrylate fonctionnel à site de durcissement acide carboxylique et/ou à site de durcissement chlore, ou un caoutchouc d'acrylate fonctionnel à site de durcissement anhydride ; et
c) des réticulations entre des groupes réactifs dans le caoutchouc d'acrylate.

2. Un vulcanisat thermoplastique selon la revendication 1, dans lequel les réticulations sont formées par une réaction entre un agent de durcissement de type par addition et des groupes réactifs dans le caoutchouc d'acrylate.

3. Un vulcanisat thermoplastique selon la revendication 1, qui est préparé par réticulation dynamique d'un mélange homogène à l'état fondu avec un agent de durcissement de type par addition, dans lequel le mélange homogène à l'état fondu comprend une phase plastique et une phase caoutchouc, et dans lequel
la phase plastique comprend d'environ 25 parties à environ 95 parties en poids, rapporté à 100 parties en poids des phases plastique et caoutchouc, d'un polyuréthane thermoplastique dont les segments durs présentent un point de fusion d'environ 130 °C à environ 240 °C ; et
la phase caoutchouc comprend d'environ 75 parties à environ 5 parties, en poids rapporté à 100 parties en poids des phases plastique et caoutchouc, du caoutchouc qui est un caoutchouc d'acrylate fonctionnel à site de durcissement acide carboxylique et/ou à site de durcissement chlore, ou un caoutchouc d'acrylate fonctionnel à site de durcissement anhydride.

4. Un vulcanisat thermoplastique selon la revendication 1, dans lequel
la phase plastique comprend d'environ 25 parties à environ 70 parties en poids, rapporté à 100 parties en poids des phases plastique et caoutchouc, d'un polyuréthane thermoplastique dont les segments durs présentent un point de fusion d'environ 130 °C à environ 240 °C, et
la phase caoutchouc comprend d'environ 75 parties à environ 30 parties, en poids rapporté à 100 parties en poids des phases plastique et caoutchouc, d'un caoutchouc qui est un caoutchouc d'acrylate fonctionnel à site de durcissement acide carboxylique et/ou à site de durcissement chlore, un caoutchouc d'acrylate fonctionnel à site de durcissement anhydride.

5. Un vulcanisat thermoplastique selon la revendication 1, dans lequel
la phase plastique comprend d'environ 70 parties à environ 95 parties en poids, rapporté à 100 parties en poids des phases plastique et caoutchouc, du plastique, et le plastique est un polyuréthane thermoplastique dont les segments durs présentent un point de fusion d'environ 130 °C à environ 240 °C, et
la phase caoutchouc comprend d'environ 30 parties à environ 5 parties, en poids rapporté à 100 parties en poids des phases plastique et caoutchouc, d'un caoutchouc qui est un caoutchouc d'acrylate fonctionnel à site de durcissement acide carboxylique et/ou à site de durcissement chlore, ou un caoutchouc d'acrylate fonctionnel à site de durcissement anhydride.

6. Un vulcanisat thermoplastique selon la revendication 1, dans lequel
la phase plastique comprend d'environ 25 parties à environ 50 parties en poids, rapporté à 100 parties en poids des phases plastique et caoutchouc, d'un plastique, et le plastique est un polyuréthane thermoplastique dont les segments durs présentent un point de fusion d'environ 130 °C à environ 240 °C, et
la phase caoutchouc comprend d'environ 75 parties à environ 50 parties, en poids rapporté à 100 parties en poids des phases plastique et caoutchouc, du caoutchouc qui est un caoutchouc d'acrylate fonctionnel à site de durcissement acide carboxylique et/ou à site de durcissement chlore, ou un caoutchouc d'acrylate fonctionnel à site de durcissement anhydride.

7. Un vulcanisat thermoplastique selon la revendication 1, comprenant en outre un plastifiant.

8. Un vulcanisat thermoplastique selon la revendication 7, dans lequel la quantité de plastifiant dans le vulcanisat thermoplastique va d'environ 4 parties à environ 35 parties, rapporté à 100 parties en poids des phases plastique et caoutchouc.

9. Un vulcanisat thermoplastique selon la revendication 2, dans lequel l'agent de durcissement de type par addition est une oxazoline multifonctionnelle ou un époxyde multifonctionnel.

10. Un vulcanisat thermoplastique selon la revendication 2, le vulcanisat thermoplastique comprenant d'environ 0,5 partie à environ 15 parties, rapporté à 100 parties en poids des phases plastique et caoutchouc, de l'agent de durcissement de type par addition.

11. Un vulcanisat thermoplastique selon la revendication 2 dans lequel l'agent de durcissement de type par addition est la 2,2'-(1,3-phénylène)bis(2-oxazoline), ou la 2,2'-(1,4-phénylène)bis(2-oxazoline), ou la 2,2'-(2,6-pyridylène)bis(2-oxazoline), ou des mélanges de celles-ci.

12. Un vulcanisat thermoplastique selon la revendication 1 où plus de 80 pour cent en poids du caoutchouc est réticulé.

13. Une garniture, un tube, un tuyau, un joint, un amortisseur de vibration, un stator, un raccord, un boîtier, un étui, un film, un absorbeur de chocs, un support anti-vibration, un élément d'accouplement, une douille, un manchon, ou un soufflet, ou une mousse comprenant un vulcanisat thermoplastique selon la revendication 1.

14. Un tube ou un tuyau comprenant au moins une couche comprenant un vulcanisat thermoplastique selon la revendication 1.

15. Un procédé pour produire un vulcanisat thermoplastique comprenant le fait de mélanger une composition comprenant une phase plastique et une phase caoutchouc avec un agent de durcissement de type par addition, dans lequel le mélange est effectué dans des conditions de mélange qui produisent un profil de cisaillement approprié et à une température au-dessus du point de fusion de la phase plastique, et dans lequel
la phase plastique comprend d'environ 25 parties à environ 95 parties en poids, rapporté à 100 parties en poids des phases plastique et caoutchouc, d'un polyuréthane thermoplastique dont les segments durs présentent un point de fusion d'environ 130 °C à environ 240 °C ; et
la phase caoutchouc comprend d'environ 75 parties à environ 5 parties, en poids rapporté à 100 parties en poids des phases plastique et caoutchouc, du caoutchouc qui est un caoutchouc d'acrylate fonctionnel à site de durcissement acide carboxylique et/ou à site de durcissement chlore, ou un caoutchouc d'acrylate fonctionnel à site de durcissement anhydride.

16. Un procédé selon la revendication 15, dans lequel la phase caoutchouc et la phase plastique sont mélangées de manière homogène à l'état fondu préalablement à l'ajout de l'agent de durcissement de type par addition.

17. Un procédé selon la revendication 15, dans lequel la phase caoutchouc et la phase plastique sont mélangées de manière homogène à l'état fondu pendant que l'agent de durcissement de type par addition est ajouté à la composition.

18. Un procédé selon la revendication 15, le procédé comprenant :
préalablement au fait de mélanger de manière homogène à l'état fondu avec le caoutchouc, le fait de mélanger de manière homogène à l'état fondu la phase plastique avec une quantité prédéterminée d'agent de durcissement de type par addition afin de former un mélange homogène d'agent de durcissement et de plastique ;
le fait de mélanger le mélange homogène d'agent de durcissement et de plastique avec la phase caoutchouc afin de former un mélange homogène de phase plastique et de phase caoutchouc.

19. Un procédé selon la revendication 18, comprenant en outre le fait d'ajouter de l'agent de durcissement de type par addition supplémentaire au mélange homogène de phase caoutchouc et de phase plastique sous mélange à l'état fondu continu.

20. Un élastomère thermoplastique comprenant une phase plastique et une phase caoutchouc, dans lequel
a) la phase plastique comprend d'environ 25 parties à environ 95 parties en poids, rapporté à 100 parties en poids des phases plastique et caoutchouc, d'un polyuréthane thermoplastique dont les segments durs présentent un point de fusion d'environ 130 °C à environ 240 °C, et
b) la phase caoutchouc comprend d'environ 75 parties à environ 5 parties, en poids rapporté à 100 parties en poids des phases plastique et caoutchouc, du caoutchouc qui est un caoutchouc d'acrylate fonctionnel à site de durcissement acide carboxylique et/ou à site de durcissement chlore, ou un caoutchouc d'acrylate fonctionnel à site de durcissement anhydride.
